# EUROPÄISCHE PATENTANMELDUNG

(11) **EP 4 567 390 A1**
(43) Veröffentlichungstag der Anmeldung: **11.06.2025**
(21) Anmeldenummer: 23215184.5
(22) Anmeldetag: 08.12.2023
(51) Int. Cl.: G01K 7/42, G01J 3/28, G01K 11/12, G06N 3/02

(54) **VERFAHREN ZUR TEMPERATURBESTIMMUNG EINES LASERMEDIUMS**

(71) Anmelder: Justus-Liebig-Universität Gießen, 35390 Gießen (DE)
(72) Erfinder: Rahimi-Iman, Arash, 35394 Gießen (DE); Mannstadt, Jakob, 63571 Gelnhausen (DE)
(74) Vertreter: Stumpf, Peter

(57) **Zusammenfassung**

Die Erfindung betrifft Computerimplementiertes Verfahren zur Temperaturbestimmung eines Lasermediums umfassend folgende Schritte
I. Bereitstellen der Laser-Messdaten (D1) eines Lasers mit einem Lasermedium an einer ersten Position (P1) des Lasermediums
II. Übergabe der Laser-Messdaten (d1) aus Schritt I an einen Inputlayer eines trainierten Künstlichen Neuronalen Netzes N
III. Anwendung des trainierten Künstlichen Neuronalen Netzes N auf die Laser-Daten aus Schritt II zur Ermittlung des Temperaturwertes des Lasermediums, so dass Temperaturdaten (T) erzeugt werden
IV. Ausgabe der Temperaturdaten (T) aus Schritt III als Temperatur des Lasermediums

## Beschreibung

Die vorliegende Erfindung betrifft ein Verfahren zur Temperaturbestimmung eines Lasermediums.

### Beschreibung und Einleitung des allgemeinen Gebietes der Erfindung

Temperatursensorik ist heutzutage technologisch makroskopisch sowie mikroskopisch breit genutzt und ausgereift. Sie ist mit unterschiedlichen Auflösungsgenauigkeiten entsprechend Anwendungszweck anpassbar. Dabei kommen überwiegend Temperatursensoren mit thermischer Ausdehnung eines Objektmaßes, wie z.B. Länge oder Volumen, oder eines thermisch induzierten Potentialgefälles zur elektronischen Erfassung zum Einsatz. Alternativ gibt es passive Sensoren, die das von einem Objekt emittierte Licht z.B. dessen Propagation, Interferenz, Rückstreuung etc. nutzen, wobei die Strahlungsquelle das Objekt bescheint, welches zur Temperaturerfassung ausgelegt, spezifiziert oder gar indirekt genutzt wird, um daraufhin die eingesammelten elektromagnetischen Signale auszuwerten. Bildgebend wird Thermographie mit IR Kameras betrieben, die aus der Wärmestrahlung die Oberflächentemperatur ableiten und üblicher Begrenzungen unterliegen in Hinblick auf Auflösungsvermögen, Signal-zu-Hintergrund-Verhältnis und Objektdistanz gemäß eingesetzten Optiken und Detektorchips.

### Stand der Technik

Für die Temperaturbestimmung verschiedener Lasermedien gibt es bereits Lösungen aus dem Stand der Technik:
Die Schrift CN108168726A offenbart ein Verfahren zum Messen der Innentemperatur eines Lasermediums in einem Festkörperlaser. Dabei wird die Temperatur aus dem Fluoreszenzintensitätsverhältnis aus dem Abwärtsübergang von dotierten Seltenerdionen im Lasermedium bestimmt. Dazu wird ein Fluoreszenzintensitätsverhältnis gemessen, das durch den Übergang von Seltenerdionen an einer bestimmten Position im Lasermedium von einem thermischen Kopplungsenergieniveau während des Betriebsprozesses des Festkörperlasers erzeugt wird. So kann die Temperatur des Lasermediums an dieser Position genau ermittelt werden. Mit der angewandten Methode kann die interne Temperaturverteilung des Lasermediums im Laser unter der Bedingung, dass der Festkörperlaser normal funktioniert, in Echtzeit gemessen werden.

In der Schrift KR102027525B1 wird ein Messsystem zur Bestimmung der Temperatur eines Ringlasers offenbart. Dabei wird die Reinheit und der Druck des Lasermediums auf der Grundlage des Spektrums bestimmt und daraus die Temperatur berechnet. Dieses Verfahren ist nur für bestimmten Arten von Lasern geeignet.

Die Schrift EP2741062B1 offenbart ein Verfahren und eine Vorrichtung zum Messen der Temperatur einer Halbleiterschicht (z.B. eines Halbleiterlasers). Dabei wird die Änderung der durch sie hindurchtretenden Lichtmenge überwacht (Transmission). Dazu wird die Schicht mit einem externen Laser bestrahlt und die reflektierte Strahlung und die von der Halbleiterschicht selbst emittierte Strahlung erfasst und ausgewertet, um daraus die Schichttemperatur zu bestimmen. Dies ermöglicht aber keine Bestimmung der Temperatur, wenn diese Halbleiterschicht nicht nur thermisch oder durch lokale Absorption Strahlung emittiert, sondern als Laser Strahlung emittiert. Eine gleichzeitige quantitative Erfassung von Transmissions-, Reflexions- und Emissionsmengen an Strahlung einer bestimmten Schichtstruktur ist technisch mit diesem Verfahren nicht möglich.

Diese Lösungen weisen jedoch je nach ausgewerteter Strahlung technische Komplikationen auf:
Bisherige Verfahren sind jeweils nur für eine bestimmten Art von Lasern geeignet.

Bei der Auswertung der rückgestreuten Strahlung liegt die Komplikation darin, dass diese dem Laserlicht eine Vibrationsinformation der Oberfläche (z.B. Raman-Spektroskopie) aufprägt, was die Auswertung erschwert.

Bei der Auswertung der abgestrahlten Wärmestrahlung ist die Schwierigkeit, dass Wärmestrahlung Detektionsschwierigkeiten durch Umgebung, Medium, Geometrie, Oberflächenbeschaffenheit (Streueigenschaften, Materialemissionsgrad für thermische Strahlung, Metamaterialien-unterdrückte Rückstreuung oder Abstrahlung) unterliegt. Ein ausreichendes Signal-zu-Hintergrundverhältnis und Detektierbarkeit erfordern den Einsatz geeigneter Lichtquellen, sensibler Detektoren und einer optischen Verknüpfung (Freistrahlweg oder Faserführung) zur Zielfläche. Das macht diese Verfahren sehr aufwändig und teuer. Wenn die transmittierte Strahlung ausgewertet werden soll, erfordert dies eine Detektion innerhalb oder außerhalb des Objekts. Damit verläuft eine Temperaturbestimmung in jenem Bauteil auf dem Objekt selbst (mit geeigneten und wohlplatzierten integrierten Detektoren) oder extern nach Signalerfassung durch ausgelagerte (Fern-)Detektoren. Das ist sehr aufwändig.

Alternativ könnte man separate Thermometer verwenden. Dieses zusätzliche Bauteil erfordert jedoch Platz und Integration, Energieversorgung, Auswertung und Signalverarbeitung vor der Datenübertragung. Eine Messung ohne separates Thermometer ist deshalb sehr vorteilhaft.

### Aufgabe

Aufgabe der vorliegenden Erfindung ist es, ein einfaches, zuverlässiges und universell einsetzbares Verfahren zur Bestimmung der Temperatur des Lasermediums bereitzustellen.

### Lösung der Aufgabe

Die Lösung dieser Aufgabe ergibt sich aus den Merkmalen des Hauptanspruchs. Weiterhin sind vorteilhafte Ausgestaltungen und Weiterbildungen der Erfindung den Unteransprüchen entnehmbar.

Bei dem erfindungsgemäßen Verfahren zur Temperaturbestimmung eines Lasermediums wird die Temperatur im Vergleich mit einer bekannten Referenztemperatur über ein computerimplementieres Verfahren unter Nutzung eines künstlichen neuronalen Netzes bestimmt. Dabei wird eine geeignete Korrektur von möglichen signifikanten geschwindigkeitsabhängigen Dopplerverschiebungen berücksichtigt.

Zunächst erfolgt eine Definition, wie einige für das erfindungsgemäße Verfahren maßgebliche Begriffe im Rahmen dieser Erfindung zu verstehen sind:
Der Begriff **Laser** steht für "light amplification by stimulated emission of radiation" d.h. für Lichtverstärkung durch stimulierte Emission von Strahlung. Im Rahmen dieser Anmeldung bezeichnet der Begriff Laser das Gerät, mit dem Laserstrahlen erzeugt werden.

Laserstrahlen sind elektromagnetische Wellen. Vom Licht einer zur Beleuchtung verwendeten Lichtquelle, beispielsweise einer Glühlampe, unterscheiden sie sich vor allem durch die sonst unerreichte Kombination von hoher Intensität, oft sehr engem Frequenzbereich (monochromatisches Licht), scharfer Bündelung des Strahls und großer Kohärenzlänge. Auch sind, bei sehr weitem Frequenzbereich, extrem kurze und intensive Strahlpulse mit exakter Wiederholfrequenz möglich.

Laser haben zahlreiche Anwendungsmöglichkeiten in Technik und Forschung sowie im täglichen Leben, vom einfachen Lichtzeiger (z. B. Laserpointer bei Präsentationen) über Entfernungsmessgeräte, Schneid- und Schweißwerkzeuge, Auslesen von optischen Speichermedien wie CDs, DVDs und Blu-ray Discs, Nachrichtenübertragung bis hin zum Laserskalpell und anderen Laserlicht verwendenden Geräten im medizinischen Alltag.

Laser gibt es für Strahlungen in verschiedenen Bereichen des elektromagnetischen Spektrums: von Mikrowellen (MASER) über den weiten infraroten Spektralbereich bis hin zu sichtbarem Licht, sowie darüber hinaus ins Ultraviolette und in jenen Frequenzbereichen, die mit Röntgenstrahlung und noch kurzwelligerer Strahlung in Verbindung gebracht werden. Die besonderen Eigenschaften der Laserstrahlen entstehen durch ihre Erzeugung in Form einer stimulierten Emission. Der Laser arbeitet wie ein optischer Verstärker, typischerweise in resonanter Rückkopplung. Die dazu erforderliche Energie wird von einem Lasermedium (bspw. Kristall, Gas oder Flüssigkeit) bereitgestellt, in dem aufgrund äußerer Energiezufuhr, dem als das Pumpen bezeichnete Vorgang, eine sogenannte Besetzungsinversion herrscht. Die resonante Rückkopplung entsteht in der Regel dadurch, dass das Lasermedium sich in einem elektromagnetischen Resonator für die Strahlung bestimmter Richtung und Wellenlänge, den elektromagnetischen Lasermoden, befindet.

Der optisch (elektromagnetisch) aktive Teil eines Lasers ist das invertierte **Lasermedium,** häufig auch **Gewinnmedium oder aktives Medium** bezeichnet.

Im Lasermedium entstehen durch optischen Übergang angeregter Elektronen in Atomen oder Molekülen bzw. Elektronen in Halbleiterkristallen in einen energetisch günstigeren Zustand Photonen mit übergangsspezifischer Energie (Frequenz). Zentrale Bedingung für Laseraktivität eines Mediums ist, dass sich eine Besetzungsinversion in den laserrelevanten Zuständen (Energieniveaus) herstellen lässt. Das bedeutet, dass der obere Zustand des relevanten optischen Übergangs mit einer höheren Wahrscheinlichkeit besetzt ist als der untere. Ein solches Medium muss hierzu aus Gründen der statistischen Besetzungsverteilung mindestens über drei involvierte Energieniveaus verfügen und kann gasförmig (z. B. CO₂), flüssig (z. B. Farbstofflösungen) oder fest (z. B. Rubinkristall, Halbleitermaterial) sein. Die optischen Eigenschaften des Lasermediums hängen dabei stark von der Temperatur ab. Deshalb kann die Temperatur des Lasermediums über dessen Emissionsspektrum bestimmt werden.

Dabei gibt es für verschiedene Anwendungen verschiedene Arten von Lasern:
Laserdioden, die elektromagnetische Strahlung entsprechend ihres Halbleitermediums im sichtbaren Spektralbereich emittieren, können bei passender sicherer Leistung zur visuellen Erfassung, Peilung oder Ortung der Detektionsrichtung und der Bauteilaktivität genutzt werden. Bestimmte Halbleiterlaserdioden (Mikrochiplaser) oder optisch gepumpte Scheibenlaser, die auch noch bei Bedarf Pumplaserlichtdetektion mitermöglichen, können durch bspw. Emission im nahinfraroten Spektralbereich für reduzierte visuelle Störung (Lichtverschmutzung, Laserschutz etc.) und optimierte Transmission durch die Umgebung (Medium zwischen Laser und Spektrometer mit typischen Absorptionsbanden) eingesetzt werden.

Mikroskopische Laser oder besonders energieeffiziente Halbleiterlaser können für Miniatursensorik oder in Hinblick auf lange Batterielaufzeiten ausgewählt werden, wobei bei allen Lasern jene zu erfassenden relevanten (reversiblen oder irreversiblen) Veränderungen des Emissionsverhaltens durch Temperatureinflüsse im gewünschten Betriebsumfeld und für den gewünschten Temperaturbereich entsprechend vorliegen müssen. Durch sinnvolle Lasersignalmessungen können dann Verknüpfungen zur Temperatur des Lasermediums bzw. des Lasertragenden Objekts etabliert werden.

Eine charakteristische Größe um das Verhalten eines Lasers zu beschreiben, ist dessen Spektrum.

Ein **Spektrum** ist in der Physik die Häufigkeitsverteilung einer bestimmten physikalischen Größe, beispielsweise Energie, Wellenlänge, Frequenz oder Masse, die in dem betrachteten System mit verschiedenen Werten vorkommt. Je nach Messverfahren kann als Häufigkeitsmaß zum Beispiel die Anzahl der Messobjekte einer bestimmten Schwingungsfrequenz oder -Wellenlänge, die Ereignisrate der Detektion eines bestimmten massebehafteten Elements, der Fluss einer Wellen- oder Teilchenart (eines Trägers bestimmter Energie) durch eine Messapparatur oder die energieabhängige Signal-Intensität auf einem Detektionsschirm gewählt werden. Vereinfacht gesagt zeigt das Spektrum, "wie stark" jeder messbare Wert, den die betrachtete Größe haben kann, in einem betrachteten Messobjekt (z.B. Licht, atomare Masse etc.) vertreten ist. Dies setzt den Einsatz geeigneter Detektoren und Signalauffangmöglichkeiten voraus.

Im Rahmen dieser Anmeldung ist mit Spektrum das elektromagnetische Spektrum gemeint. Der Begriff **Laser-Messdaten** bezieht sich im Rahmen dieser Anmeldung immer auf die Messdaten der Verteilung spektraler Leistungsdichte eines Lasers, d.h. dessen Spektrum.

Diese Messdaten umfassen Information über Wellenlänge λ, Frequenz f oder Wellenzahl v gepaart mit einer Intensitätsangabe, typischerweise als Tupelpaarliste mit N Einträgen entsprechend der N verarbeiteten Spektrometerdatenpunkte oder Pixel, oder als Vektor oder Matrix mit Spektralinformation.

Die spektrale Leistungsdichte (engl. power spectral density, PSD) beschreibt die energetische Leistungsverteilung eines Signals über verschiedene Frequenzen. Die Leistungsdichte besitzt typischerweise die Einheit (m/s²)²/Hz. Berücksichtigt man nicht geometrische Aspekte der Abstrahlung z.B. Einkopplungseffizienzen und spektrale Sensitivitäten der Messapparatur, ist von einer relativen Intensitätsmessung auszugehen. Dabei werden die durch ein Spektrometer aufgenommenen Signale spektral zerlegt und in Beziehung zu einander als einheitenlose relative Intensitätsverteilung (Zählrate, engl. counts) gesetzt. Somit ist ein Intensitätsspektrum nicht automatisch ein Maß für die vom Objekt abgestrahlte Gesamtleistung in dem spektralen Fenster. Die vom Messsystem aufgenommene spektrale Charakteristik kann jedoch in Beziehung gesetzt werden mit Eigenschaften des Lasers, wie z.B. die mittlere effektive Temperatur im Lasermedium; je kleiner bzw. örtlich begrenzter das laserlicht-emittierende Medium, desto lokaler die Temperaturinformation. Diese Beziehungen können durch Vermessung der Charakteristik von einem geeigneten Diagnosesystem (sei es Mensch oder Maschine) erlernt werden.

Zur Bereitstellung der Laser-Messdaten d.h. zur Erfassung des Spektrums eines Lasers wird üblicherweise ein Spektrometer verwendet.

Ein **Spektrometer** ist ein Gerät zur Darstellung eines Spektrums. Im Unterschied zu einem Spektroskop bietet es die Möglichkeit, die Spektren auszumessen.

Bei Frequenzen deutlich unterhalb des sichtbaren Lichts bietet die Hochfrequenztechnik elektronische Möglichkeiten, Spektren zu messen.

Bei den optischen Spektrometern wird die Unterscheidung der Wellenlängen der zu analysierenden Strahlung oft durch Richtungsablenkung mittels Brechung in einem Prisma oder durch Beugung an einem Gitter erzeugt. Es ist auch möglich, die Frequenzanteile mittels eines Interferometers anhand einer Fourieranalyse zu bestimmen (FTIR-Spektrometer). Eine weitere Auswertungsmöglichkeit ist die Verwendung von sogenannten Künstlichen Neuronalen Netzen.

### Künstliche Neuronale Netze:

Künstliche Neuronale Netze, auch Künstliche Netzwerke, kurz: KNN (englisch artificial neural network, ANN), sind Netze aus künstlichen Neuronen. Künstliche Neuronale Netze basieren auf der Vernetzung vieler einzelner, meist in Schichten angeordneter, künstlicher Neuronen. Die Intensität der Verbindungen zwischen den Neuronen wird durch sogenannte Gewichtungen/Gewichte gesteuert. Die Topologie sowie die steuernden Parameter eines Netzes werden in Abhängigkeit der Problemstellung gewählt.

In einer Trainingsphase werden KNN anhand von Eingangsdaten (Eingangssignal), für die erwartete Ergebnisse (Soll-Signal) vorliegen, durch Vergleich dieser mit den errechneten Ergebnissen (Ergebnis-Signal) angelernt.

Die Differenz von Ergebnis- und Soll-Signal wird als Loss (engl. Begriff für Verlust, als Fähigkeitsbewertung des KNN zu verstehen) bezeichnet. Der sogenannte Loss zeigt an, wie gut das erwartete und das tatsächliche Ergebnis übereinstimmen. Um die Qualität der Verarbeitung zu verbessern, muss dieser Loss für zukünftige Durchläufe im Lernprozess zur Minimierung der Fehler berücksichtigt werden. Diese Anpassung der Informations-Verarbeitung (durch ein gewöhnlich vorwärtspropagierendes Netz) bezeichnet man als Backpropagation bzw. Gewichts-Anpassung. Hierbei werden die Gewichte zwischen den Neuronen derart justiert, dass sie das jeweilige Netzwerkmodell zukünftig dem gewünschten Ergebnis näherbringen.

Basierend darauf kann die Lernfähigkeit von KNNs als Fähigkeit zum Vergleich eines bestimmten Ergebnisses und eines erwarteten Ergebnisses, gefolgt von einer Anpassung entsprechend der Differenz zwischen diesen Werten, definiert werden.

KNNs sind dadurch in der Lage, mithilfe eines iterativen Trainingsprozesses komplizierte nichtlineare Funktionen zu erlernen.

Ein weit verbreitetes Prinzip für das Training von KNN stellt das überwachte Lernen dar. Hierbei wird das Neuronale Netz mit einer Menge von Tupeln aus zusammengehörenden Eingangs- (x) und Ausgangssignalen (y) mithilfe des zuvor beschriebenen Prinzips trainiert und iterativ angepasst. Die Menge von Tupeln (x, y), die für das Training genutzt werden, bezeichnet man als Trainingsdaten (D_{training}). Die Funktion des Netzes auf ihm unbekannten Daten wird mithilfe von Validierungsdaten (D_{validation}) ermittelt. Diese Menge von Tupeln (x, y) enthält Daten, mit denen das Netz nicht trainiert wurde. Es gilt D_{training} ∩ D_{validation} = 0.

### Künstliche Neuronale Netze umfassen mehrere Schichten um Daten zu verarbeiten:

### Inputlayer

Die Inputlayer (Eingabeschicht) bezieht sich auf die erste Schicht von Knoten in einem Künstlichen Neuronalen Netz. Diese Schicht empfängt Eingangsdaten aus der Außenwelt. Ein Künstliches Neuronales Netz (KNN/ANN) ist ein maschinelles Lernmodell, das von der Struktur und Funktion des menschlichen Gehirns inspiriert ist. Die Eingabeschicht besteht aus künstlichen Neuronen und ist für die Weitergabe der rohen Eingabedaten an das Netzwerkmodell in einem Format verantwortlich, welches das Netz in Folgeschichten (durch vorgesehene Rechenoperationen) bearbeiten kann. Die Umwandlung von Rohdaten in ein geeignetes Eingangsformat kann als Teil der für eine Problemstellung individuellen Datenaufbereitungsphase erfolgen. Die Struktur der Eingangsdaten beeinflusst die Funktionsweise eines Netzwerks bzw. ein KNN Modell wird üblicherwerweise auf eine bestimmte Datenstruktur angepasst gestaltet. Beispielsweise kann der Eingang eines KNN eine eindimensionale Liste mit einzelnen Zahlenwerten oder eine multidimensionale Datenmatrix mit komplexer Informationsstruktur aufnehmen.

### Hiddenlayer

Der Hiddenlayer (verborgene Schicht, versteckte Schicht) befindet sich in einem Künstlichen Neuronalen Netz (KNN) zwischen dem Eingang und dem Ausgang des Algorithmus. Dabei kann ein Künstliches Neuronales Netz ein oder mehrere Hiddenlayer aufweisen. Hiddenlayer haben die Funktionm den Eingängen Gewichte zuzuweisen und sie durch eine Aktivierungsfunktion zum Ausgang zu leiten. Kurz gesagt, Hiddenlayer führen nichtlineare Transformationen der in das Netz eingegebenen Eingaben durch. Versteckte Schichten variieren je nach der Funktion des Neuronalen Netzes, und ebenso können die Schichten je nach den ihnen zugeordneten Gewichten variieren. Versteckte Schichten sind, einfach ausgedrückt, Schichten mit mathematischen Funktionen, die jeweils eine spezifische Ausgabe für ein bestimmtes Ergebnis erzeugen sollen. Einige Formen von (nach außen hin) ausgeblendeten Schichten sind zum Beispiel als Squashing-Funktionen bekannt. Diese Funktionen sind besonders nützlich, wenn die beabsichtigte Ausgabe des Algorithmus eine Wahrscheinlichkeit ist, denn sie nehmen eine Eingabe und erzeugen einen Ausgabewert zwischen 0 und 1, dem Bereich zur Definition der Wahrscheinlichkeit.

Versteckte Schichten ermöglichen es, die Funktion eines Neuronalen Netzes in spezifische Transformationen der Daten aufzuschlüsseln. Vollvernetzte Schichten sind jene, bei denen alle Neuronen einer Schicht mit allen Neuronen der Folgeschicht verbunden sind. Jede Funktion der ausgeblendeten Schicht ist darauf spezialisiert, eine bestimmte Ausgabe zu erzeugen. Beispielsweise können die Funktionen einer ausgeblendeten Schicht, die zur Erkennung menschlicher Augen und Ohren verwendet werden, in Verbindung mit nachfolgenden Schichten zur Erkennung von Gesichtern in Bildern verwendet werden. Während die Funktionen zur Erkennung von Augen allein nicht ausreichen, um Objekte unabhängig voneinander zu erkennen, können sie in einem Neuronalen Netz gemeinsam funktionieren. Spezielle Hiddenlayer können bestimmte Vereinfachungen der Datenstruktur im Verarbeitungsprozess bewirken, wie die zwei folgenden Beispiele aufzeigen:

### Flattenlayer

Der Flattenlayer (Abflachungsschicht) dient dazu die beispielsweise höhere Dimensionalität einer Schicht für die Weiterverarbeitung in einer Folgeschicht zu reduzieren. Diese Hilftsschicht(en) kann/können an beliebigen Stellen eines KNN Modells entlang der Informationsverarbeitungsachse (der Hiddenlayer-Spur mit ihren aneinandergehängten vernetzten Neuronenschichten) eingesetzt werden.

### Poolinglayer

Der Poolinglayer (Kombinationsschicht/Sammelschicht) dient dazu die Informationsdichte geeignet zu reduzieren. Dabei werden einzelne Neuronen einer multidimensionalen Schicht durch Algorithmen zur Zusammenlegung künstlich kombiniert und durch ein Neuron in einer Folgeschicht beispielsweise per Mittelwertbildung repräsentiert, was z.B. die Anzahl der Gesamtneuronen, die Verarbeitungsgeschwindigkeit oder Anfälligkeit für Ausreißersignal in komplexeren KNN reduzieren kann. Diese als Beispiel angeführte Methode soll zeigen, dass anwendungsspezifische KNN Modelle auf verschiedene Hilfsmittel in der Neuronenvernetzung zur verbesserten Informationsverarbeitung zurückgreifen können, wie z.B. Poolinglayer in der Bildanalyse.

### Outputlayer

Der Outputlayer (Ausgabeschicht) ist die letzte Schicht des Neuronalen Netzes, auf der die gewünschten Prognosen bzw. Ergebnisse erstellt werden. In einem Neuronalen Netz gibt es eine Ausgabeschicht, die die gewünschte endgültige Vorhersage oder Ergebnisdarstellung erzeugt. Sie hat üblicherweise einen eigenen Satz von Gewichten und Verzerrungen, die angewendet werden, bevor die endgültige Ausgabe abgeleitet wird. Die Aktivierungsfunktion für die Ausgabeschicht kann je nach Problemstellung eine andere sein, als die für den Hiddenlayer.

### Klassifizierernetzwerk

Ein KNN vom Typ Klassifizierer (engl. classifier) unterteilt die Ausgabe in vorgegebene Kategorien und stellt üblicherweise eine Wahrscheinlichkeitsverteilung dar, mit der die jeweiligen Ergebnismöglichkeiten auftreten können, wie z.B. eine in feste Schritte aufgeteilte Temperaturskala zur Bestimmung des wahrscheinlichsten Temperaturwertes, welcher dem Eingangssignal vom Netzwerkmodell zugeordnet wurde.

### Regressornetzwerk

Ein KNN vom Typ Regressor gibt als Ergebnis üblicherweise einen Zahlenwert an, der am wahrscheinlichsten zu dem Eingangssignal gehört. Damit können z.B. Temperaturen kommastellengenau von gemessenen Laserspektren abgeleitet und vom Netzwerk als individuelles Ergebnis ausgegeben werden.

### Generative-Netzwerke

Die Kategorie der generativen Netzwerke umschreibt jene Modelle, die aus einem Eingangssignal mithilfe eines KNN Modells ein üblicherweise möglichst realitätsnahes Objekt generieren, wie beispielsweise ein Bild, ein Text, eine Tonaufnahme.

### Arten von Künstlichen Neuronalen Netzen:

### Perzeptron-Netze

Das Perzeptron (nach engl. perception, "Wahrnehmung") ist ein vereinfachtes Künstliches Neuronales Netz. Es besteht in der Grundversion (einfaches Perzeptron) aus einem einzelnen künstlichen Neuron mit anpassbaren Gewichtungen und einem Schwellenwert. Unter diesem Begriff werden heute verschiedene Kombinationen des ursprünglichen Modells verstanden, dabei wird zwischen einlagigen und mehrlagigen Perzeptren (engl. multi-layer perceptron, MLP) unterschieden. Perzeptron-Netze wandeln einen Eingabevektor in einen Ausgabevektor um und stellen damit einen einfachen Assoziativspeicher dar.

Perzeptron-Netze können in verschiedene Typen unterteilt werden:
Regressor, KNN der Regressorart bzw. vom Regressortyp
Classifier, KNN der Klassifiziererart bzw. vom Klassifizierungstyp

### Autoencoderstruktur

Ein Autoencoder ist ein Künstliches Neuronales Netz, das dazu genutzt wird, effiziente Codierungen zu lernen. Das Ziel eines Autoencoders ist es, eine komprimierte Repräsentation (Encoding) für einen Satz Daten zu lernen und somit auch wesentliche Merkmale zu extrahieren. Dadurch kann er zur Dimensionsreduktion genutzt werden. Aus dem Encoding kann dann eine Decodierung erfolgen, die im Outputlayer eine künstlich erzeugte Rekonstruktion des Eingangssignals enthält (Autoencoder). Diese Struktur und ähnliche Konzepte können im Rahmen generativer Netzwerkmodelle genutzt werden.

Eine halbe Autoencoderstruktur ist der Teil, der das Encoding zur Merkmalextraktion beinhaltet. Somit beginnt das Netzwerk mit einem Inputlayer mit vielen Neuronen und einem Outputlayer mit wenigen Neuronen.

Der Autoencoder benutzt drei oder mehr Schichten:
1. Einen Inputlayer. Bei der Gesichtserkennung können die Neuronen beispielsweise die Pixel einer Fotografie abbilden.
2. Eine oder mehrere Schichten, die das Encoding bilden.
3. Einen Outputlayer, in der jedes Neuron die gleiche Bedeutung hat, wie das entsprechende Neuron im Inputlayer.

Wenn lineare Neuronen benutzt werden, ist die Arbeitsweise eines Autoencoders der Hauptkomponentenanalyse sehr ähnlich.

### Zum Training des Künstlichen Neuronalen Netz:

Beim Training des Künstlichen Neuronalen Netzes werden durch Vergleich der aus den Trainingsdaten TD1 berechneten Ist-Werte mit den Soll-Werten D1 der Trainingsdaten, die im Künstlichen Neuronalen Netzwerk enthaltenen Gewichte angepasst. Dieser iterative Prozess endet mit einem autark anwendbaren trainierten Künstlichen Neuronalen Netz N.

Hierdurch wird das Netz N zur Mustererkennung befähigt. Bei der Nutzung von N zur Bestimmung der Temperatur des Lasermediums erfolgt daher bevorzugt kein Zugriff auf konkrete Datensätze der Trainingsdaten, sondern ausschließlich auf die erlernten Gewichte im trainierten Künstlichen Neuronalen Netz. Die Bestimmung erfolgt damit nur auf Basis dieser durch das Training erlernten Gewichte.

### Trainingsphase

Vor der eigentlichen Durchführung des erfindungsgemäßen Verfahrens muss das KNN eine Trainingsphase als einen Schritt 0 durchlaufen. Dieses überwachte Lernen erfolgt anhand charakteristischer vorab aufgenommener und/oder künstlich bereitgestellter Übungsdaten. Diese Übungsdaten beziehen sich auf eine bekannte Referenztemperatur und Referenzlaserwellenlänge.

Hierzu sind Laser-Trainingsmessdaten TD1 vorgesehen, die üblicherweise ein Emissionsspektrum mit einer zugewiesenen Kennzeichnung der Laserbetriebstemperatur, Laserpumpleistung (Eingangsleistung) und Laseremissionsleistung (Ausgangsleistung) versehen sind. Als vergleichbar werden Datensätze gleicher Pumpleistung betrachtet, da in praktischen Anwendungen die Eingangsleistung typischerweise möglichst konstant gehalten werden, während die Ausgangsleistung mit der Temperatur variieren kann.

Das Ziel beim überwachten Lernen bzw. Transferlernen des verfügbaren Neuronalen Netzes ist die Einstimmung eines untrainierten bzw. vortrainierten KNN Modells auf die Zielparameter (wie spektrale Position der Laseremissionslinie und dazugehörige Temperatur des Lasermediums) und auf die Signalquelle-Detektor-Kombination (Verhalten des betrachteten Lasersignals bei unterschiedlichen Lasermedium-Temperaturen und geräteabhängige Wahrnehmung dieses Verhaltens seitens des signalempfangenden Geräts).

Dieser Schritt 0 umfasst folgende Teilschritte:
**0a**. Empfangen der Laser-Trainingsmessdaten TD1.
**0b**. Vorverarbeitung der Laser-Trainingsmessdaten TD1 zu vorverarbeiteten Laser-Trainingsmessdaten TD1* und Übergabe dieser vorverarbeiteten Laser-Trainingsmessdaten TD1* an das Künstliche Neuronale Netz *N*.

### Vorverarbeitung in der Trainingsphase:

Im erfindungsgemäßen Verfahren können bei Bedarf sowohl Laserdaten verwendet werden, die ohne Vorverarbeitung im roh bereitgestellten Datenformat an das KNN Modell geeigneter neuronalen Eingangs- und Verarbeitungsarchitektur übergeben werden, als auch solche, die auf eine systematische Weise an das KNN angepasst vorverarbeitet werden. Mögliche Aufbereitung kann beispielsweise sein: (i) die Hintergrundsignalbereinigung, (ii) die Normierung der Signalwerte, (iii) die Standardisierung der Achsen, (iv) die Umstellung der Spektralachse auf eine relative Skala mit Bezug zu einem Referenzwert, etc.

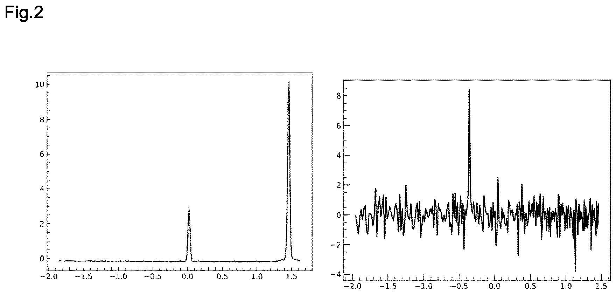

Um für das Training des Netzes qualitativ hochwertige Daten zu nutzen, werden die verwendeten Daten wie bspw. Laser-Daten TD1 vorzugsweise zu vorverarbeiten Laser-Daten TD1* aufbereitet werden. Dies wird auch als Vorverarbeitung bezeichnet. Dies wird schematisch in Abbildung Fig.2 gezeigt.

Dazu muss eine sogenannte Daten-Pipeline eingerichtet werden. Diese definiert die einzelnen Teilschritte der Vorverarbeitung. Diese Daten-Pipeline dient dazu, die heterogen gespeicherten Daten in bereinigte Datensätze zu überführen, die problemlos im weiteren Verfahren zu verwenden sind.

Die Vorverarbeitung berücksichtigt geeignete Maßnahmen zur Anreicherung (Data Augmentation) der Daten.

### Die Vorverarbeitung folgende Schritte:

### a. Extraktion

Die Laser-Daten werden aus den Rohdaten extrahiert.

### b. Auswahl

In diesem Schritt werden nicht verwendbare Datensätze von der weiteren Verarbeitung ausgeschlossen. Es sollen nur vollständige Datensätze für das Training genutzt werden, um das Erlernen von Korrelationen zu optimieren.

### c. Bereinigung

Die Laser-Aufzeichnungen werden beschnitten, um technische Artefakte z.B. am Beginn und/oder am Ende zu beseitigen.

### d. Skalierung

Die Laser-Daten werden durch mathematische Methoden in eine Form überführt, die für den Lernprozess und die Loss-Optimierung günstig ist. Dies übernimmt z.B. ein softwarebasierter Skalierer, der beispielsweise die Werte der Daten in Hinblick auf eine bestimmte statistische Verteilung und Wertespannen anpasst.

### e. Dimensionsänderung

Die Laser-Daten können durch Zusammenfügen oder Transformationen in eine geeignetere Dimensionalität überführt werden, z.B. von zweidimensionaler Datenstruktur in eine eindimensionale Liste oder in eine mehrdimensionale Matrix, welche auf den Inputlayer des eingesetzten KNN Modells abgestimmt ist.

### f. Speichern

Die Daten werden in gleichgroße Gruppen aufgeteilt. Abhängig vom gewünschten Verhältnis zwischen Trainingsdaten und den Übungsdaten (bevorzugt ist hierbei ein Verhältnis von 80% zu 20%) wird eine bestimmte Anzahl von Gruppen (z.B. 6) für das Training verwendet, der Rest für die Validierung. Diese Konstellation aus Trainings- und Validierungssplit wird je als eine Datensatz-Variante gespeichert. Dieser Vorgang wird so lange wiederholt, bis entweder genügend Varianten angelegt sind oder alle Kombinationen von Gruppen im Training/in der Validierung aufgetreten sind. Dies ermöglicht das Training identisch aufgebauter Modelle mit unterschiedlichen Daten. In Kombination liefern diese Modelle eine höhere Performance auf unbekannte Daten als ein einzelnes Modell aus dieser Menge. Dies wird auch als Ensembling bezeichnet.

**0c.** Ermittlung der Temperatur des Lasermediums durch das Künstliche Neuronale Netz *N* aus den vorverarbeiteten Laser-Trainingsmessdaten aus Schritt 0b.

### 0d. Eingabe der Referenzdaten D1

Die Daten D1 dienen als Referenzdaten zum Training des KNN.

Diese Daten werden mit den Trainingsdaten TD1 erfasst und sind Teil eines Trainings- sowie des Validierungs-Datensatzes. Es handelt sich hier um die Lasermedium-Temperatur, mit der die aus Laser-Messdaten mittels KNN ermittelte Temperatur verglichen wird. Referenzdaten für den Lernprozess bestehen aus spektraler Information für die Laseremission gepaart mit einer Temperaturangabe (Ist-Wert) gemäß eines Temperatursensors, welcher so gut möglich mit dem Lasermedium thermisch gekoppelt und für eine Temperatur-Pumpleistung-Einstellung sich möglichst in einem thermischen Gleichgewichtszustand mit diesem befindet. Referenzdaten können hierzu je nach KNN Modell als vorverarbeiten Daten D1* vorliegen. Eine weitere Form der Referenzdaten sind relative Spektralinformationen zur Temperaturbestimmung. Diese Spektralinformationen basiert auf einer Temperaturverschiebung der spektralen Laseremissionslinie als Funktion der Lasermedium-Temperatur relativ zu einem Referenzwert bei einer Referenztemperatur. Hier muss die Vorverarbeitung angepasst werden, Die Messdaten sind insofern aus Daten D1 anzupassen, so dass deren spektrale Skala (z.B. Wellenlänge oder Frequenz) in Bezug auf die Referenz-Wellenlänge oder -Frequenz des Lasers bei der Temperatur der Referenzbetrachtung (z.B. Referenztemperatur 20°C) vorliegt. Das Ergebnis sind angepasste vorverarbeitete Daten D1**.

**0e**. Iterativer Soll-Ist-Vergleich der ermittelten Temperaturen mit den Referenzdaten D1 (oder D1* oder D1**) mit anschließendem Anpassen der Gewichte G im Künstlichen Neuronalen Netz *N*.

**0f**. Fertigstellen des trainierten Künstlichen Neuronalen Netzes *N* mit den angepassten Gewichten G.

Nach der Trainingsphase wird das erfindungsgemäße Verfahren durchgeführt.

### Erfindungsgemäßes Verfahren:

Die in einem vorangegangenen Schritt (der nicht Teil des erfindungsgemäßen Verfahrens ist) erhobenen Laser-Trainingsmessdaten oder -Validierungsmessdaten werden als Eingangssignale des erfindungsgemäßen Verfahrens verwendet.

Dazu umfasst das erfindungsgemäße computerimplementierte Verfahren folgende Schritte:
I) Bereitstellen der Laser-Messdaten D1 eines Lasers mit einem Lasermedium an einer ersten Position P1 des Lasermediums..

In einem ersten Schritt werden Laser- Messdaten an einer ersten Position P1 bereitgestellt. Für die Erfassung des Spektrums der vom Laser emittierten elektromagnetischen Strahlung und Bereitstellung der Laser-Messdaten wird bevorzugt mindestens ein Spektrometer für den relevanten Spektralbereich für die Datenakquise verwendet. Der relevante Spektralbereich hängt dabei von der Art des Lasers ab.

In manchen Fällen werden die Laser-Messdaten D1 direkt an ein trainiertes Künstliches Neuronalen Netzes N übergeben. Dazu werden geeignete Laser-Spektrometer-Paare und KNN Modelle benötigt. Der Vorteil liegt dabei darin z.B. Rechenleistung oder Prozessschritte einzusparen. Vorzugsweise erfolgt eine Vorverarbeitung der Laser-Messdaten D1 zu vorverarbeiteten Laser-Messdaten D1* oder D1**. Dabei liegt der Vorteil in einer Performancemaximierung oder möglichst guter Generalisierung des KNN Modells.

### Dazu erfolgt vorzugsweise ein Schritt lb) zur Vorverarbeitung der Laser-Messdaten D1 zu vorverarbeiteten Laser-Messdaten D1*

### lb) Vorverarbeiten der Laser-Messdaten D1

Das Vorverarbeiten der Laser-Messdaten D1 zu vorverarbeiteten Laser-Messdaten D1* erfolgt dabei vorzugsweise wie im Abschnitt Vorverarbeitung in der Trainingsphase beschrieben.

Ergänzend können die Laser-Messdaten D1 so vorverarbeitet werden, dass deren spektrale Skala (z.B. Wellenlänge oder Frequenz) in Bezug auf die Referenz-Wellenlänge oder -Frequenz des Lasers bei der Temperatur der Referenzbetrachtung (z.B. Referenztemperatur 20°C) vorliegt. Dann erfolgt eine Vorverarbeitung in vorverarbeitete Laser-Messdaten D1**.

Danach erfolgt im Schritt II, die
II) Übergabe der Laser-Messdaten D1 oder der vorverarbeiteten Laser-Messdaten D1* oder der vorverarbeiteten Laser-Messdaten D1** an einen Inputlayer eines trainierten Künstlichen Neuronalen Netzes N
III) Anwendung des trainierten Künstlichen Neuronalen Netzes N auf die Laser-Daten D1 oder die vorverarbeiteten Laser-Messdaten D1* oder vorverarbeiteten Laser-Messdaten D1** zur Ermittlung des Temperaturwertes T des Lasermediums.
IV) Ausgabe des Temperaturwertes des Lasermediums

Das trainierte Künstliche Neuronale Netz N umfasst dabei einen Inputlayer, wenigstens einen Hiddenlayer und einen Outputlayer. Zur Performancesteigerung können beispielsweise Hiddenlayer Hilfsschichten wie beispielsweise Flattenlayer zur Komplexitätsreduktion im Künstlichen Neuronalen Netz N vorliegen.

Die Durchführung des Verfahrens erfolgt durch eine Vorrichtung zur elektronischen Datenverarbeitung PC, Smartphone, Mac etc.. Es handelt sich um ein computerimplementiertes Verfahren.

Das trainierte Künstliche Neuronale Netz N kann dabei beispielsweise eine Netzarchitektur des Typs Perceptrons aufweisen. Eine andere mögliche Architektur ist die halbe Autoencoderstruktur (Eingangsneuronen mit zunehmend reduzierter Neuronenzahl in dem mindestens einen Hiddenlayer bis zum Ausgang), angelehnt an GAN-artige Netze und Autoencoder mit Encoder-Decoder-Struktur, die eine Engpassschicht mit kondensierter Lerninformation und Merkmalsempfindlichkeit aufweisen können.

Im Künstlichen Neuronalen Netz N erfolgt die Eingabe der Laser-Messdaten als Spektrum und Ausgabe als Temperatur in Grad Celsius bzw. Kelvin.

Bei der Anwendung des trainierten Künstlichen Neuronalen Netzes N wird beispielsweise die charakteristische temperaturabhängige Spektralverschiebung mindestens einer spektralen Laserlinie eines Lasermediums zur Temperaturbestimmung ausgenutzt und (algorithmisch) ausgewertet.

Dies ermöglicht eine Fernauslese in der Distanz durch ein Spektrometer und Auswertung des Signals durch ein trainiertes Neuronales Netz, welches durch maschinelles Lernen aus gemessenen Spektren mit detektiertem Lasersignal eine Temperaturdiagnose betreiben kann.

Weiterhin ermöglicht das erfindungsgemäße Verfahren die Nutzung integrierter Laser für die Ferndiagnose von Temperaturen/Temperaturänderungen und damit verbundener möglicher Veränderungen in Bauteilen. Dies ist nutzbar als Teil der Prozessüberwachung und dient der Wartungsminimierung. Weiterhin ermöglicht das Verfahren ein Transferlernen eines trainierten Künstlichen Neuronales Netzes die Erkennung anderer bzw. abweichender spektraler Merkmale oder Konfigurationen (Variation des Verbunds aus Bauteil, Laser und Spektrometer) zur Temperaturbestimmung. Dabei geht es darum, dass Transferlernen dazu genutzt werden kann, ein für ein anderes Lasermerkmal ausgelegtes Künstliche Neuronale Netz N auf eine bevorzugte andere Messgröße (z.B. Temperatur) umzutrainieren. Somit kann nach dem Umtrainieren das durch das Umtrainieren angepasste Künstliche Neuronale Netz N* diese andere Messgröße verlässlich aus Laserdaten bestimmen. Auch kann das das erfindungsgemäße Verfahren dazu genutzt werden, dass ein trainiertes Künstliche Neuronale Netz N, welches für eine bestimmte Kombination aus lasertragendem Bauteil, Laser und Spektrometer trainiert ist, bei Bedarf auf eine andere Kombination umzutrainieren. Das ermöglicht es nach Variation des Verbunds aus Bauteil, Laser und Spektrometer erneut geeignete Temperaturmessungen durch ein angepasstes Künstliche Neuronale Netz N* durchzuführen.

Es ist auch möglich, das Verfahren durchzuführen, ohne dass während des Betriebes ein Training erfolgt.

### Weitere Ausführungsbeispiele

In einer Weiterführung des erfindungsgemäßen Verfahrens wird zusätzlich eine Laser-Signalzeitspur als Laser-Messdaten D1 bereitgestellt. Dabei ist das trainierte Künstliche Neuronale Netz N auch auf zeitliche Temperaturschwankungsursachen trainiert.

Dabei wird in Schritt III ein auf zeitliche Variationen angepasstes trainiertes Künstliches Neuronales Netz N verwendet, das aus der zeitlichen Art der spektralen Veränderung des Signals eine Aussage über mögliche Ursachen treffen kann. Es ließe sich bspw. aus einer bestimmten reversiblen zeitlich begrenzten Spektralverschiebung auf eine bestimmte externe Wärmeeinwirkung (charakteristisches Zuschalten eines Leistungsverbrauchers) oder bekannten Umgebungsänderung (wie zyklische Klimaanlagenabschaltung, Änderung der Raumluft, etc.) schließen; oder es ließe sich aus einem bestimmten irreversiblen zeitlichen Signalverlauf eine typische Degradationssituation (wie Ausfall einer Pumpdiode, Kristalldefektentstehung, etc.) erkennen. Zudem ermöglicht eine Zeitspur zusätzlich, die Temperaturänderungsrate aus den bereitgestellten Laser-Messdaten D1 zu bestimmen.

Dazu umfasst das trainierte Künstliche Neuronale Netz einen Inputlayer bevorzugt mit einer 2D oder höherdimensionalen Eingangsstruktur (z.B. für Zeitserien, die abgeschlossen und als Matrix gespeichert wurden) und für eine mögliche Leistungsoptimierung bzw. Geschwindigkeitsoptimierung der algorithmischen Verarbeitung mit mindestens einem Flattenlayer zur Dimensionsreduktion: Damit können beispielsweise eingehende Intensitäts-Wellenlängen-Wertetupel eines Spektrums einer Zeitserie, die als Teil einer mehrdimensionalen Datenmatrix vorliegen, in eine niedrigdimensionalere Struktur wie eine Liste mit abwechselnden Wellenlängen- und Intensitätseintragungen verwandeln werden. Dabei erfolgt am Beispiel eines zweidimensionalen Datensatzes pro Zeitschritt mit m x 2 Einträgen eine Transformation in eine eindimensionalen Datensatz mit 2*m x 1, was zwar die Zahl der Neuronen des Inputlayers erhöht, aber die Dimensionalität und damit Komplexität des Netzwerks verringert. Ein spezielles Beispiel eines solchen Netzwerkmodells für laufende Zeitserien kann ein RNN sein (engl. Recurrent Neural Net), welches nacheinander empfangene Signale (Laser-Daten D1 oder D1* oder D1**) in Beziehung zu einander setzt (Informationen eines Zeitschritts im nachfolgenden Schritt mitberücksichtigt).

In einer Weiterführung des erfindungsgemäßen Verfahrens liegen die Laser-Messdaten D1, als Bilddaten vor. Dabei ist das trainierte Künstliche Neuronale Netz N auf die Auswertung von Bildern trainiert.

Bevorzugt liegen die Laser-Messdaten D1, als zeitliche Serien von Bilddaten vor, um so auch eine zeitliche Änderung der Temperatur des Lasermediums erfassen zu können.

In einer Weiterführung des erfindungsgemäßen Verfahrens wird dieses zur Bestimmung der Temperatur der Oberfläche eines Objektes eingesetzt. Dabei wird das Lasermedium auf der Ziel-Oberfläche angeordnet oder in das tragende Objekt integriert oder auf dessen Oberfläche positioniert. Dadurch kann die Temperatur der unmittelbar mit dem Lasermedium in Verbindung stehenden Oberfläche einen Gleichgewichtszustand einnehmen. Dadurch kann über die Laseremission ein repräsentativer Temperaturwert ermittelt werden. Dabei wird ein Laser vorzugsweise durch eine Wärmesenke auf konstanter Temperatur gehalten, wobei ein Objekt, das auf seiner Oberfläche oder im Volumen einen Laser trägt, den Laser entweder heizen oder kühlen kann. Auf Zeitskalen der Hitzedissipation, welche typischerweise im Bereich von Mikro- bis Millisekunden liegt, kann der thermisch gekoppelte Laser Rückschlüsse über die Objekttemperatur (bzw. Oberflächentemperatur) liefern. Besonders geeignet ist hier eine Halbleiterschicht als Lasermedium, da diese mit modernen Halbleitertechnologien in andere mikro- oder nanostrukturierte Bauteile integriert werden kann. Ebenso eignen sich die massenproduzierbaren Halbleiterlaser aufgrund ihrer üblicherweise sehr kompakten und energiesparenden Bauweise und/oder Betriebsweise. Ihre spektrale Emissionslage kann zudem durch diverse Herstellungsmethoden und optische Materialien über weite Spektralbereiche sowohl im Sichtbaren als auch im Unsichtbaren liegen. Dies ermöglicht die Nutzung eines Halbleiterlasers zur Messung der Temperatur bzw. Temperaturänderung der Oberfläche, an oder auf der temperaturempfindliche Halbleiterlaser positioniert ist.

Dabei werden vorzugsweise in Schritt I zusätzliche Laser-Messdaten D2 eines zweiten spektral unterschiedlichen Lichtsignals eines Lasermediums, welches an der Oberfläche des Objektes angebracht ist, erfasst. Dies dient der Verbesserung der Erkennung relativer Temperaturänderungen, d.h bezüglich einer Referenztemperatur. Dazu wird vorzugsweise ein einzelnes Lasermedium verwendet. Alternativ werden mindestens zwei separate Lasermedien verwendet, um eine Validierung für thermisch gekoppelte Laser zu ermöglichen, oder um die Bestimmung örtlich relativer Temperaturveränderungen bei thermisch ungekoppelten Lasern durchzuführen. Dies kann aus einer Kombination von Pumplaserdiodenlicht und (optisch gepumptem) Laserchiplicht erfolgen. Dabei ist die Temperaturbestimmung nicht nur auf ein Signal gestützt.

In einer Weiterführung des erfindungsgemäßen Verfahrens, erfolgt in Schritt I das Bereitstellen der Laser-Messdaten D2 eines zweiten Lasers welcher an einer anderen Position P2 auf der tragenden Oberfläche oder innerhalb des Objektkörpers angeordnet ist. Damit kann zusätzlich der Wärmefluss zwischen P1 und P2 bestimmt werden.

Das erfindungsgemäße Verfahren zur Temperaturbestimmung verwendet in dieser Weiterführung die Laser-Messdaten D1 von mehr als einem Lasermedium an verschiedenen Positionen P1, P2. Damit wird in Schritt III bei der Anwendung des trainierten Künstlichen Neuronalen Netzes N auf die Laser-Messdaten, die Temperaturänderung der Lasermedien analysiert, um so den Wärmefluss zwischen den verschiedenen Positionen P1, P2 zu ermitteln.

### Vorrichtung:

Die erfindungsgemäße Vorrichtung 1 zur Messung der Temperatur umfasst wenigstens die folgenden Elemente:

### Eingabeeinheit 10:

Die Eingabeeinheit 10 ist so ausgebildet, dass sie die Laser-Messdaten D1, D2 empfangen und an eine Auswertungseinheit 20 weiterleiten kann. Die Messdaten können dabei direkt von Messgeräten, wie z.B. einem Spektrometer 110 stammen und über einen (Zwischen-) Speicher 90 übermittelt werden. Die Datenübermittlung erfolgt dabei über eine feste Datenleitung, z.B. über eine interne Datenleitung, Lokal-Area-Network (LAN), Universal Serial Bus (USB) Verbindung etc., oder drahtlos (per Funksignal), z.B. über Wireless Lokal-Area-Network (WLAN), Bluetooth etc.

Bei der Eingabeeinheit 10 kann es sich um eine Tastatur oder um eine grafische Benutzeroberfläche oder auch grafische Benutzerschnittstelle (Abk. GUI von englisch graphical user interface) handeln.

### Datenschnittstelle 50

Die Datenschnittstelle 50 ist so ausgebildet, dass sie die Laser-Messdaten D1, D2 aus einem externen Datenverarbeitungssystem empfangen und die Temperaturdaten an ein externes Datenverarbeitungssystem weiterleiten kann. Die Datenübermittlung erfolgt dabei über eine feste Datenleitung z.B. über ein Lokal-Area-Network (LAN) etc. oder drahtlos z.B. über Wireless Lokal-Area-Network (WLAN), Bluetooth etc. Die Datenschnittstelle 50 ist üblicherweise auf den Austausch mit verschiedenen externe Datenverarbeitungssysteme ausgelegt, d.h. gängige Schnittstellen zum Datenaustausch sind z.B. USB, Cardreader, LAN, WLAN, Bluetooth. Die Datenschnittstelle 50 ist so ausgebildet, dass ein Anwender mit einem beliebigen webfähigen Gerät z.B. Tablet, PC, Smartphone im lokalen Netzwerk über die Datenschnittstelle 50 auf die Vorrichtung 1 zugreifen kann.

### Auswertungseinheit 20

Die Auswertungseinheit 20 ist so ausgebildet, dass sie die Laser-Messdaten D1, D2 von der Eingabeeinheit 10 oder einer Datenschnittstelle 50 empfangen kann. Die Datenübermittlung erfolgt dabei über eine feste Datenleitung z.B. über eine interne Datenleitung, Lokal-Area-Network (LAN) etc. oder drahtlos z.B. über Wireless Lokal-Area-Network (WLAN), Bluetooth etc. Es handelt sich um eine Vorrichtung zur elektronischen Datenverarbeitung wie beispielsweise ein PC, Smartphone oder Mac. Die Auswertungseinheit 20 ist weiterhin so ausgebildet, dass sie aus den Messdaten D1, D2 und aus den mittels Trainingsdaten enthaltenen erlernten Gewichten die Temperatur des Lasermediums durch das Künstliche Neuronale Netz N berechnen kann. Das Ergebnis dieser Berechnung sind dabei die Temperarturwerte. Als Auswertungseinheit 20 dient dabei ein Gerät zur elektronischen Datenverarbeitung z.B. ein in die Vorrichtung 1 integrierter programmierbarer Mikroprozessor. Die Auswertungseinheit 20 ist weiterhin so ausgebildet, dass sie die Temperaturdaten T an eine Ausgabeeinheit 30 übermitteln kann. Die Datenübermittlung erfolgt dabei über eine feste Datenleitung z.B. über eine interne Datenleitung, Lokal-Area-Network (LAN) etc. oder drahtlos z.B. über Wireless Lokal-Area-Network (WLAN), Bluetooth etc.

Die Auswertungseinheit 20 verwendet ein Künstliches Neuronales Netz zur Mustererkennung. Die Vorrichtung 1 liefert die Temperaturwerte des Lasermediums. Diese Temperaturwerte werden über die Ausgabeeinheit 30 in Form visueller und/oder akustischer Ausgaben ausgegeben.

### Ausgabeeinheit 30

Die Ausgabeeinheit 30 ist so ausgebildet, dass sie die Temperaturwerte der Auswertungseinheit 20 empfangen und ausgeben kann. Die Ausgabe erfolgt optisch, akustisch, haptisch und/oder in Form eines Ausdruckes.

Die Eingabeeinheit 10 und die Ausgabeeinheit 30 der Vorrichtung 1 können dabei z.B. Tasten, LEDs, (Touch) Display und Sprachein-/ausgabe umfassen.

### Ausführungsbeispiele

Die folgenden Tabellen zeigen beispielhaft den Mittleren quadratischen Fehler (engl. mean squared error, kurz: mse) der Temperaturbestimmung als Indikator der Genauigkeit nach dem überwachten Lernen (Training) eines Künstlichen Neuronalen Netzes (KNN). Die Messung erfolgte im sichtbaren (VIS) und nahinfraroten (NIR) Spektralbereich. VIS1 und VIS2 als repräsentieren Laser-Messdaten D1 Ergebnisse für zwei Spektrometer gleicher Bauart für sichtbares und nahinfrarotes Licht für Wellenlängen unterhalb von 1100 nm mit marginal abweichender Performance und Wellenlängenskalierung (beispielsweise aufgrund von Herstellungstoleranzen). Dem trainierten Künstliche Neuronalen Netz N wurden sogenannte Testdaten, welche das Netzwerk im Lernprozess nicht kennengelernt hat, zur Validierung über den Inputlayer eingespeist und die statistische Genauigkeit des Resultats als mse Wert der Temperaturermittlung bestimmt. Um unterscheiden zu können, wie präzise mit einem Regressortyp KNN die Bestimmung von Temperaturen anhand des aufgenommenen Lasersignals möglich ist, wenn die Temperaturschritte der Lernspektren grob (1°C) bis hin zu fein (0.1°C) gewählt sind, zeigt die Auswertung in Tabelle 1.

Tabelle 1 zeigt dabei den durchschnittlichen Fehler in der Temperaturbestimmung mittels eines dreischichtigen Perceptron Netzes, ε: Mittlerer Quadratischer Fehler (englisch: mse), ΔT: Schrittweite Temperaturänderung im Experiment in Grad Celsius. VIS: sichtbarer Spektralbereich; VIS1 oder VIS2 bezeichnet einen von zwei Testspektrometern.

**Tab.1:**

| *Train* | *VIS* | | | *VIS* | | | *VIS* | | |
|---|---|---|---|---|---|---|---|---|---|
| *Test* | *VIS* | *VIS1* | *VIS2* | *VIS* | *VIS1* | *VIS2* | *VIS* | *VIS1* | *VIS2* |
| *ε_dT*=*0.2°C* | *0.41* | *0.47* | *0.35* | *0.23* | *0.25* | *0.08* | *0.43* | *0.59* | *0.26* |
| *ε_dT*=*0.5°C* | *0.25* | *0.32* | *0.17* | *0.14* | *0.19* | *0.08* | *0.33* | *0.56* | *0.10* |
| *ε_dT*=*1.0°C* | *0.26* | *0.35* | *0.18* | *0.13* | *0.21* | *0.05* | *0.33* | *0.56* | *0.10* |

Tabelle 2 zeigt den entsprechenden Fehler in einem Gridsearch-optimierten 5-Layer Netz, auch aufgrund der höheren Anzahl an Hiddenlayer als Deep Neural Network (DNN) bezeichnet. Dabei werden vielversprechende Hyperparameter für das Netzwerkmodell über ein sogenanntes Gridsearchverfahren ermittelt, und die Performance der Modelle mit unterschiedlichen Parametern (wie Neuronanzahl, Datenpaketgröße/Batchsize, etc.) nach Rang gelistet.

**Tab.2:**

| *Train* | *VIS* | | | | *VIS+NIR* | | | |
|---|---|---|---|---|---|---|---|---|
| *Test* | *NIR* | *VIS* | *VIS1* | *VIS2* | *NIR* | *VIS* | *VIS1* | *VIS2* |
| *ε_dT*=*0.2°C* | *9.47* | *0.07* | *0.06* | *0.08* | *3.26* | *0.07* | *0.06* | *0.08* |
| *ε_dT*=*0.5°C* | *9.89* | *0.07* | *0.06* | *0.08* | *3.60* | *0.07* | *0.06* | *0.09* |
| *ε_dT*=*1.0°C* | *10.16* | *0.07* | *0.06* | *0.09* | *3.88* | *0.07* | *0.05* | *0.09* |

Aus bisher genutzten experimentellen Spektren abgeleitete Temperaturwerte können mit Genauigkeiten bis zu 0.1° Kelvin durch die Regressornetze bestimmt werden, wobei die Qualität der Abschätzung u.a. von der Laser-zu-Spektrometer-Konfiguration und der Netzwerkarchitektur abhängt. Trainingsdaten mit geringer Schrittweite der Temperaturabstände unterschiedlicher Lernspektren (z.B. 1° Schritte) können ebenso gute Ergebnisse bewirken wie Lerndaten, die feiner in 0.2° Schritten variiert wurden. Diese "ettiketierten" Übungsdaten (*labeled data*) können u.a. auch zur ausreichenden Generalisierung bei Regressoren dienen, während *'Classifier Networks'* mit vorgegebenen Ausgangskategorien arbeiten und entsprechend beschriftete Trainings- und Testdaten benötigen.

### Abbildungslegenden und Bezugszeichenliste

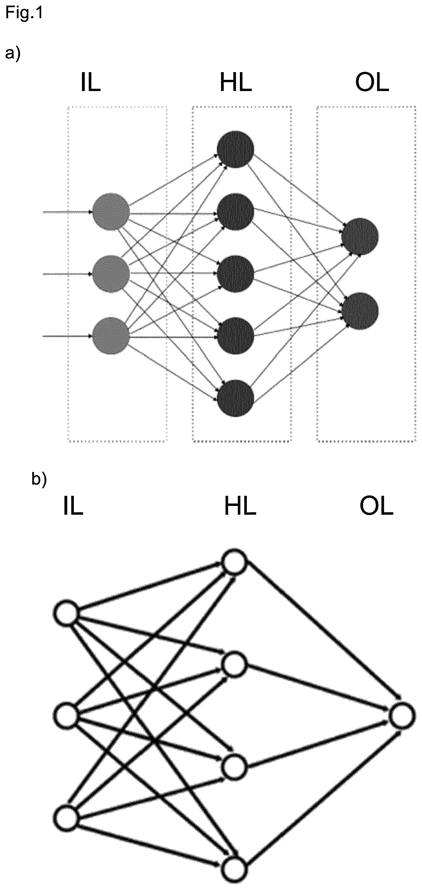

Fig. 1 zeigt beispielhafte Künstliche Neuronale Netze (KNN):
   a) ein dreischichtiges Perceptronnetz aus Input-Layer (IL), Hidden-Layer (HL) und Output-Layer (OL) vom Classifiertyp
   b) ein dreischichtiges Perceptronnetz aus Input-Layer (IL), Hidden-Layer (HL) und Output-Layer (OL) vom Regressortyp
   Output: Temperaturwert als Wahrscheinlichkeitsverteilung für vorgegebene Klasse (z.B. feste Temperaturschritte oder durch Training klassifizierbare Eigenschaften, die von Interesse sind), oder Temperaturwert mit mehreren Dezimalstellen als wahrscheinlichstes Ergebnis zum Eingangssignal. Je näher der Soll-Wert dem Ist-Wert bei wiederholten Durchläufen des KNNs, desto geringer der mittlere Fehler bei der Temperaturbestimmung.
Fig.2 zeigt ein Beispiel, wie die Vorverarbeitung erfolgen kann. Dabei wird in dargestellten Spektren der Laser-Messdatem D1 (VIS und NIR Fall abgebildet) bspw. die vertikale Achse (y) normiert oder standardisiert und die horizontale Achse (x) ebenfalls standardisiert oder um einen Referenzwert verschoben.

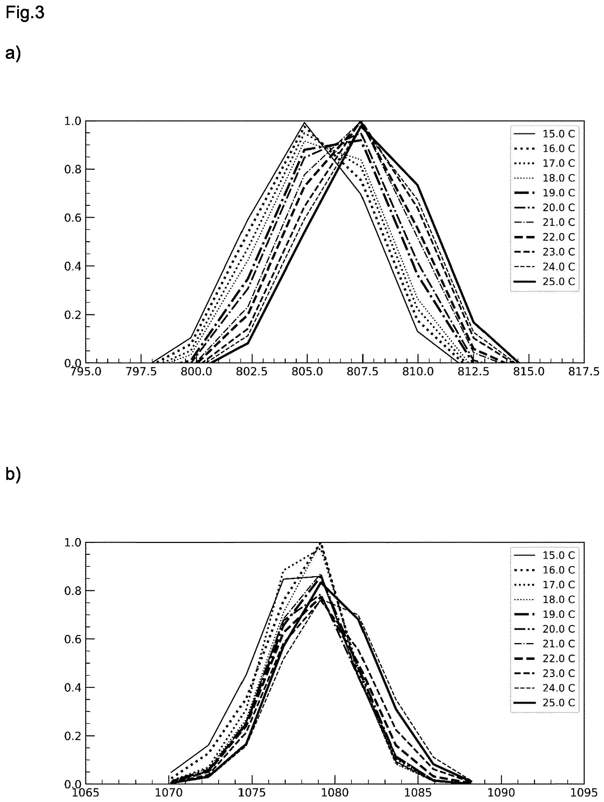

Fig. 3 zeigt die Änderung des Spektrums von Lasern bei verschiedenen Temperaturen
   a) einer Halbleitermembranlasermode
   b) einer Laserdiodenmode eines Lasers

### Bezugszeichen

- 1: Vorrichtung
- 10: Eingabeeinheit
- 20: Auswertungseinheit
- 30: Ausgabeeinheit
- 50: Datenschnittstelle
- 90: (Zwischen-)Speicher

## Patentansprüche

1. Computerimplementiertes Verfahren zur Temperaturbestimmung eines Lasermediums umfassend folgende Schritte
I. Bereitstellen der Laser-Messdaten (D1) eines Lasers mit einem Lasermedium von einer ersten Position (P1) des Lasermediums
II. Übergabe der Laser-Messdaten (D1) aus Schritt I. an einen Inputlayer eines trainierten Künstlichen Neuronalen Netzes (N)
III. Anwendung des trainierten Künstlichen Neuronalen Netzes (N) auf die Laser-Messdaten (D1) aus Schritt II. zur Ermittlung des Temperaturwertes des Lasermediums an der ersten Position (P1), so dass Temperaturdaten (T) erzeugt werden
IV. Ausgabe der Temperaturdaten (T) aus Schritt III. als Temperatur des Lasermediums an der ersten Position (P1)

2. Computerimplementiertes Verfahren zur Temperaturbestimmung eines Lasermediums gemäß Anspruch 1 umfassend folgende Schritte
I. Bereitstellen der Laser-Messdaten (D1) eines Lasers mit einem Lasermedium von einer ersten Position (P1) des Lasermediums.
Ib. Vorverarbeiten der Laser-Messdaten (D1) und Erzeugung von vorverarbeiteten Laser-Messdaten (D1*)
II. Übergabe der vorverarbeiteten Laser-Messdaten (D1*) aus Schritt Ib. An einen Inputlayer eines trainierten Künstlichen Neuronalen Netzes (N)
III. Anwendung des trainierten Künstlichen Neuronalen Netzes N auf vorverarbeiteten Laser-Messdaten (D1*) aus Schritt II. zur Ermittlung des Temperaturwertes des Lasermediums an der ersten Position (P1), so dass Temperaturdaten (T) erzeugt werden
IV. Ausgabe der Temperaturdaten (T) aus Schritt III. als Temperatur des Lasermediums an der ersten Position (P1)

3. Computerimplementiertes Verfahren zur Temperaturbestimmung gemäß Anspruch 2 **dadurch gekennzeichnet, dass** in Schritt I. zusätzliche ein Laser-Signalzeitspur als Laser-Messdaten (D1) bereitgestellt wird, und weiterhin in Schritt II in Anwendung des trainierten Künstlichen Neuronalen Netzes (N) auf die vorverarbeiteten Laser-Daten (D1*) zusätzlich die Temperaturänderungsrate bestimmt wird.

4. Computerimplementiertes Verfahren zur Temperaturbestimmung gemäß Anspruch 1,2 oder 3 **dadurch gekennzeichnet, dass** in Schritt I. die Laser-Messdaten (D1) als Bilddaten bereitgestellt werden und wobei das trainierte Künstliche Neuronale Netz (N) auf die Auswertung von Bildern trainiert ist.

5. Computerimplementiertes Verfahren zur Temperaturbestimmung gemäß Anspruch 4 **dadurch gekennzeichnet, dass** als Laser-Messdaten (D1) wenigstens eine zeitliche Serie von Bilddaten bereitgestellt werden.

6. Verwendung eines Computerimplementiertes Verfahren zur Temperaturbestimmung eines Lasermediums gemäß einem der Ansprüche 1 bis 5 zur Bestimmung der Temperatur einer Oberfläche eines Objektes, welches in thermischem Kontakt zum Lasermedium steht, wobei vor der Durchführung des Schritts I das Lasermedium auf der Oberfläche des Objektes angeordnet ist, wobei die Temperatur der Oberfläche des Objektes bestimmt wird.

7. Verwendung eines Computerimplementiertes Verfahren zur Temperaturbestimmung gemäß einem der Ansprüche 1 bis 6 **dadurch gekennzeichnet, dass** neben den Laser-Messdaten (D1) an einer ersten Position (P1), zusätzlich Laser-Messdaten (D2) eines zweiten Lasers an einer wenigstens zweiten Position (P2) bereitgestellt werden, und weiterhin in Schritt III in Anwendung des trainierten Künstlichen Neuronalen Netzes N auf die Laser-Messdaten (D1 und D2), wobei die Temperatur mindestens der Lasermedien an der ersten Position (P1) und der zweiten Position (P2) ermittelt wird, um so den Wärmefluss zwischen der ersten Position (P1), und wenigstens einerzweiten Position (P2) zu ermitteln.

8. Verwendung eines Computerimplementiertes Verfahren zur Temperaturbestimmung gemäß einem der Ansprüche 7 **dadurch gekennzeichnet, dass** neben den Laser-Messdaten (D1) an einer ersten Position (P1), zusätzlich Laser-Messdaten (D2) eines zweiten Lasers an einer wenigstens zweiten Position (P2) bereitgestellt werden,
und Vorverarbeiten der Laser-Messdaten (D1 und D2) und Erzeugung von vorverarbeiteten Laser-Messdaten (D1* und D2*), und weiterhin in Schritt III in Anwendung des trainierten Künstlichen Neuronalen Netzes (N) auf die vorverarbeiteten Laser-Messdaten (D1* und D2*), wobei die Temperatur mindestens der Lasermedien an der ersten Position (P1) und der zweiten Position (P2) ermittelt wird, um so den Wärmefluss zwischen der ersten Position (P1), und wenigstens einer zweiten Position (P2) zu ermitteln.

9. Vorrichtung zur Durchführung eines Verfahrens zur Temperaturbestimmung eines Lasermediums gemäß einem der Ansprüche 1 bis 8 **dadurch gekennzeichnet, dass** es umfasst
• eine Eingabeeinheit (10), die so ausgebildet ist, dass sie Lasermessdaten (D1, D2) entweder direkt oder aus einem (Zwischen-) Speicher (90) oder aus einer Datenschnittstelle (50) empfangen und an eine Auswertungseinheit (20) weiterleiten kann,
• eine Auswerteinheit (20) die so ausgebildet ist, dass sie die Messdaten (D1) von der Eingabeeinheit (10) oder einer Datenschnittstelle (50) empfangen kann und mittels Künstlichem Neuronalen Netz (N) aus den Laser-Messdaten (D1) sowie aus Trainingsdaten und den daraus enthaltenen erlernten Gewichten die Temperatur des Lasermediums berechnen kann, so dass Temperaturdaten (T) entstehen, die an eine Ausgabeeinheit (30) übermittelt werden können,
• eine Ausgabeeinheit (30) die so ausgebildet ist, dass sie die Temperaturdaten (T) von der Auswertungseinheit (20) empfangen und optisch, akustisch, haptisch und/oder in Form eines Ausdruckes ausgeben kann.
